# EUROPEAN PATENT APPLICATION

(11) **EP 4 790 825 A1**
(43) Date of publication of application: **12.08.2026**
(21) Application number: 25867217.9
(22) Date of filing: 04.09.2025
(51) Int. Cl.: H01M 50/569, H01M 10/42, H01M 10/48, H01M 50/20, H01M 50/50, H01M 50/505, H01M 50/519, H01M 50/572

(54) **SUBSTRATE, BATTERY MODULE, AND BATTERY ASSEMBLY**

(30) Priority: 05.12.2024 KR 20240179522
(71) Applicant: LG Energy Solution, Ltd., Seoul 07335 (KR)
(72) Inventor: KIM, Seok Hee, Daejeon 34122 (KR); KWON, Hee Yong, Daejeon 34122 (KR); BAE, Dae Han, Daejeon 34122 (KR); SHIN, Shin Yong, Daejeon 34122 (KR); JUNG, Yeon Il, Daejeon 34122 (KR)
(74) Representative: BCKIP Part mbB
(86) International application number: PCT/KR2025/013694
(87) International publication number: WO 2026/121477

(57) **Abstract**

A battery assembly according to the present invention comprises: a busbar capable of conducting electricity; a busbar frame configured to support the busbar; an end plate configured to cover the busbar frame; a substrate including a substrate body and a substrate bending portion that is bent between the end plate and the busbar frame to contact the busbar from the substrate body; and a fuse located on the substrate bending portion to interrupt electricity flowing through the substrate, wherein the fuse faces the end plate, and the end plate includes a spaced portion formed at a position corresponding to the fuse and spaced apart from the fuse.

## Description

### TECHNICAL FIELD

### CROSS-REFERENCE TO RELATED APPLICATION

This application claims priority to and the benefit of Korean Patent Application No. 10-2024-0179522, filed on December 5, 2024, the disclosure of which is incorporated herein by reference in its entirety.

### TECHNICAL FIELD

The present invention relates to a substrate, a battery module, and a battery assembly. More specifically, the present invention relates to a substrate, a battery module, and a battery assembly having a structure for preventing damage to a fuse.

### BACKGROUND ART

A secondary battery may be provided to supply electricity, but since a single secondary battery has a low available voltage, a plurality of secondary batteries may be connected to form a battery assembly to provide electricity of a higher voltage. The battery assembly may be referred to as, for example, a battery module or a battery pack.

Such a battery assembly may include a substrate configured to sense the voltage of each of a plurality of secondary batteries in order to control the voltage of each of the plurality of secondary batteries and to transmit data regarding the voltage. Data regarding the secondary battery voltage transmitted by the substrate is transmitted to an external component such as a battery management system (BMS), based on which a separate signal for controlling the secondary battery voltage may be received.

In this case, the substrate may be provided with a plurality of circuits connected to each of the plurality of secondary batteries. Each of the circuits may be inscribed on the substrate by patterns or the like. Each of the circuits may experience an overcurrent in the process of transmitting voltage information in electrical form, and when an overcurrent flows, the temperature of the circuit may rise and eventually lead to fire. To prevent this, a fuse may be installed in the circuit of the substrate, such that when a current above a predetermined value flows, the fuse blocks current flow through a wire.

However, when the fuse is broken or cracked due to external force, problems may occur such as unexpected interruption of circuit current, or failure of the fuse to operate even when an overcurrent flows through the circuit and the current should be interrupted. However, in the process of configuring a battery assembly compactly to increase electrical output per unit volume, problems may arise in failing to secure adequate distance between the fuse and surrounding components. As a result, when an external force is applied to the battery assembly, problems such as cracking may occur as the fuse comes into contact with surrounding components.

The above-described background art was possessed or acquired by the present inventors in the process of deriving the disclosure of the present application, and it cannot necessarily be said to be a prior art publicly disclosed before filing the present application.

### DISCLOSURE

### TECHNICAL PROBLEM

The present invention has been devised to solve the above-described problems, and an object of the present invention is to provide a substrate, a battery module, and a battery assembly having a structure for preventing cracking of a fuse.

The technical problems to be solved by the present disclosure are not limited to the above-mentioned technical problems, and other technical problems that are not mentioned will be clearly understood by those skilled in the art to which the present disclosure pertains from the following description.

### TECHNICAL SOLUTION

A battery assembly according to one embodiment of the present invention includes: a busbar capable of conducting electricity; a busbar frame configured to support the busbar; an end plate configured to cover the busbar frame; and a substrate including a substrate body and a substrate bending portion that is bent between the end plate and the busbar frame so as to come into contact with the busbar from the substrate body; and a fuse located on the substrate bending portion to interrupt an electrical current flowing through the substrate, wherein the fuse faces the end plate, and the end plate includes a spacing portion formed spaced apart from the fuse at a position corresponding to the fuse.

The spacing portion may protrude in a stepped manner.

The end plate may further include: an upper cover portion extending from a side of the spacing portion close to the substrate body; and a busbar cover portion extending from a side of the spacing portion close to the busbar, and the spacing portion may protrude more than the upper cover portion and may protrude less than the busbar cover portion.

The end plate may include a hanger protrusion portion including the spacing portion, and the hanger protrusion portion may include: a hanger space located outside of the spacing portion; and a hanger portion having a hanger hole formed therein, the hanger hole being in communication with the hanger space to allow for entry into the hanger space.

The battery assembly may further include a connector mounted on the substrate bending portion, the busbar may be provided in plurality and include an end busbar having a terminal portion that is located at an outermost side and is bent to protrude therefrom, and the substrate bending portion may be located between the connector and the terminal portion and includes a wing portion where the fuse is located.

The end plate may include: a connector insertion hole formed for insertion of the connector; and a terminal portion exposure hole formed such that the terminal portion is exposed to the outside and configured such that the spacing portion is located between the terminal portion exposure hole and the connector hole, and the wing portion may be configured to be covered by the spacing portion.

The wing portion may have a width corresponding to the spacing portion, and the spacing portion may cover an area of which width is less than four times a width occupied by the fuse.

The wing portion may be pin-coupled to the busbar frame.

The wing portion may have a coupling hole formed therein for the pin-coupling, and the coupling hole may be covered by the spacing portion.

The busbar frame may include a busbar partition rib protruding to separate the busbar and the connector, and the wing portion may be located on a side of the busbar partition rib opposite to the busbar.

The battery assembly may further include a stiffener located between the wing portion and the busbar frame and supporting the wing portion, and the stiffener may support the wing portion such that the wing portion is parallel to the spacing portion.

The busbar frame may include: a connector supporting portion protruding to allow coupling of the connector; and an end busbar mounting portion configured to mount the end busbar, and the wing portion may be coupled to the busbar frame between the connector supporting portion and the end busbar mounting portion.

The busbar frame may include a busbar partition rib protruding to separate the busbar and the connector, the substrate bending portion may include: a starting bending portion extending toward the busbar; a connector coupling portion bent and extending from the starting bending portion in a direction approaching the end plate, configured to have a connector mounted thereon, and supported by the connector supporting portion; a back extension portion bent and extending from an end of the connector supporting portion at the connector coupling portion in a direction away from the end plate; and a side extension portion bent from the back extension portion and extending toward the end plate, supported by the busbar partition rib, and having a width greater than the back extension portion, and the wing portion may extend from the side extension portion in a direction away from the busbar.

The battery assembly may further include a connector mounted on the substrate bending portion, the busbar may be provided in plurality, the substrate bending portion may include: a sensing end provided in plurality, each contacting a respective one of the plurality of busbars; a connector pin hole provided in plurality into which the connector is inserted; and a plurality of circuits extending from each of the plurality of connector pin holes to a respective one of the plurality of sensing ends and configured to allow a current to be interrupted by the fuse, and each of the plurality of circuits may have a same length to have equal resistance.

The plurality of circuits may be configured to have no repeatedly bent portions.

The battery module according to one embodiment of the present invention may include: a busbar capable of conducting electricity; a busbar frame configured to support the busbar; an end plate configured to cover the busbar frame; and a substrate including a substrate body and a substrate bending portion that is bent between the end plate and the busbar frame so as to come into contact with the busbar from the substrate body; and a fuse located on the substrate bending portion to interrupt an electrical current flowing through the substrate, the fuse may face the end plate, and the end plate may include a spacing portion formed spaced apart from the fuse at a position corresponding to the fuse.

The spacing portion may protrude in a stepped manner.

The end plate may further include: an upper cover portion extending from a side of the spacing portion close to the substrate body; and a busbar cover portion extending from a side of the spacing portion close to the busbar, and the spacing portion may protrude more than the upper cover portion and may protrude less than the busbar cover portion.

The end plate may include a hanger protrusion portion including the spacing portion, and the hanger protrusion portion may include: a hanger space located outside of the spacing portion; and a hanger portion having a hanger hole formed therein, the hanger hole being in communication with the hanger space to allow for entry into the hanger space.

A substrate according to one embodiment of the present invention may include: a substrate body; and a substrate bending portion configured to be bent from the substrate body, the substrate bending portion may include: a starting bending portion having a width smaller than or equal to a width of the substrate body; a side extension portion located closer to an end than the starting bending portion and having a width greater than the width of the starting bending portion; a wing portion extending from the side extension portion toward the substrate body; and a sensing end extending from the side extension portion or the wing portion and having a sensing function, and the wing portion may be configured such that a fuse is located thereon.

### ADVANTAGEOUS EFFECTS

A substrate according to one embodiment of the present invention can include a wing portion configured to locate a fuse thereon so as to maximize a gap with an adjacently located end plate.

In an end plate of a battery assembly according to one embodiment of the present invention, a spacing portion facing a fuse is spaced apart from the fuse by a predetermined distance, thereby preventing interference with the fuse.

A spacing portion of a battery assembly according to one embodiment of the present invention is formed in a stepped manner to ensure sufficient rigidity, thereby preventing deformation by external forces and contact with the fuse.

The effects that can be obtained from the present invention are not limited to the above-mentioned effects, and other effects that are not mentioned will be clearly understood by those skilled in the art to which the present disclosure pertains from the description below.

### DESCRIPTION OF DRAWINGS

FIG. 1 is a perspective view illustrating a battery assembly according to a first embodiment of the present invention.
FIG. 2 is an exploded view of the battery assembly shown in FIG. 1.
FIG. 3 is an enlarged exploded view of the configuration related to the busbar shown in FIG. 2.
FIG. 4 is an enlarged exploded view of the configuration related to the busbar shown in FIG. 3 viewed from a different angle
FIG. 5 is an enlarged perspective view illustrating the battery assembly of FIG. 1 with an end plate separated and viewed toward a location where the busbar is located.
FIG. 6 is an enlarged view illustrating a part of FIG. 5.
FIG. 7 is a cross-sectional perspective view taken along line VII-VII' shown in FIG. 1.
FIG. 8 is a cross-sectional view illustrating what is shown in FIG. 7 as viewed vertically.
FIG. 9 is an enlarged view illustrating a plate bending portion of a substrate according to a comparative example corresponding to the substrate bending portion of the substrate shown in FIG. 2.
FIG. 10 is an enlarged view illustrating the substrate bending portion of the substrate shown in FIG. 2.
FIG. 11 is an exploded view illustrating the battery assembly shown in FIG. 2 as viewed from the rear.
FIG. 12 is a cross-sectional view taken along line XII-XII' shown in FIG. 1.
FIG. 13 is a cross-sectional view illustrating a substrate bending portion and associated components thereof according to a second embodiment of the present invention.
FIG. 14 is a cross-sectional view illustrating a substrate bending portion and associated components thereof according to a third embodiment of the present invention.
FIG. 15 is a cross-sectional view illustrating a substrate bending portion and associated components thereof according to a fourth embodiment of the present invention.
FIG. 16 is an exploded view illustrating a battery assembly according to a fifth embodiment of the present invention.

### MODES OF THE INVENTION

Hereinafter, preferred embodiments of the present invention will be described in detail with reference to the accompanying drawings so that those skilled in the art to which the present invention pertains may easily implement the invention. However, the present invention may be implemented in various different forms and is not limited or restricted by the following embodiments.

In order to clearly describe the present invention, a part that is unrelated to the description or detailed descriptions of related known art that may unnecessarily obscure the gist of the present invention have been omitted, and in adding reference numerals to the components of each drawing in this specification, the same or similar reference numerals are assigned to the same or similar components throughout the specification.

In addition, terms or words used in this specification and claims should not be construed as being limited to conventional or dictionary meanings, and should be interpreted as having meanings and concepts consistent with the technical spirit of the present invention, based on the principle that the inventors can appropriately define the concepts of terms in order to best explain their own invention.

The various embodiments of this document and the terms used therein are not intended to limit the technical features described in this document to specific embodiments, but should be understood to include various changes, equivalents, or alternatives of the corresponding embodiments.

In connection with the description of the drawings, similar reference numerals may be used for similar or related components.

The singular form of a noun corresponding to an item may include one or more of the items, unless the relevant context clearly indicates otherwise.

In this document, each of the phrases such as "A or B," "at least one of A and B," "at least one of A or B," "A, B, or C," "at least one of A, B, and C", and "at least one of A, B, or C" may include any one of the items listed together in the corresponding phrase, or all possible combinations thereof.

The term "and/or" includes any combination of a plurality of related recited elements or any one of the plurality of related recited elements.

Terms such as "first," "second," or "first" or "second" may merely be used to distinguish one component from other corresponding components, and do not limit the components in other aspects (e.g., importance or order).

When any (e.g., first) component is referred to as being "coupled" or "connected" to another (e.g., second) component, with or without the terms "functionally" or "communicatively," it means that the any component may be connected to the other component directly (e.g., by wire), wirelessly, or through a third component.

Terms such as "comprise" or "have" are intended to specify that the features, numbers, steps, operations, components, parts, or combinations thereof described in this document are present, but do not preclude the presence or possibility of addition of one or more other features, numbers, steps, operations, components, parts, or combinations thereof.

When a component is said to be "connected," "coupled," "supported," or "in contact" with another component, this includes not only cases where the components are directly connected, coupled, supported, or in contact, but also cases where they are indirectly connected, coupled, supported, or in contact through a third component.

When a component is said to be located "on" another component, this includes not only cases where one component is in contact with another component, but also cases where another component is present between the two components.

Meanwhile, the terms "vertical direction," "lower side," and "front-rear direction" used in the following description are defined with reference to the drawings, and the shape and position of each component are not limited by these terms.

Hereinafter, embodiments according to the present invention will be described in detail with reference to the accompanying drawings.

### First embodiment

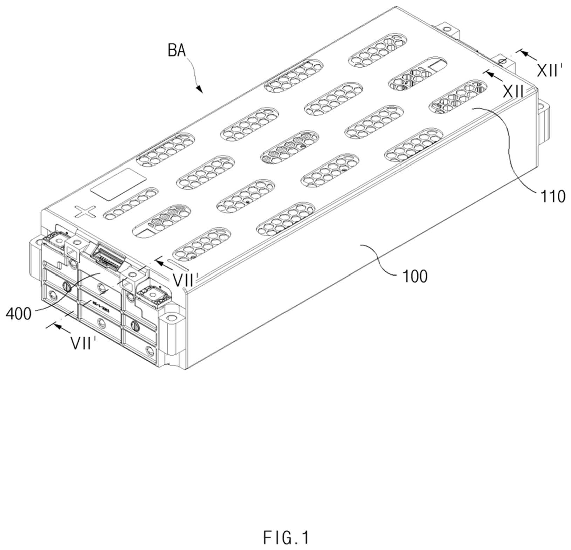

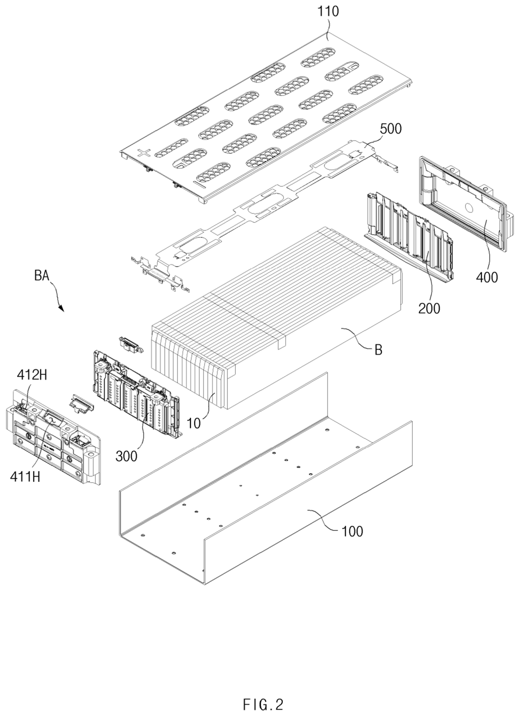

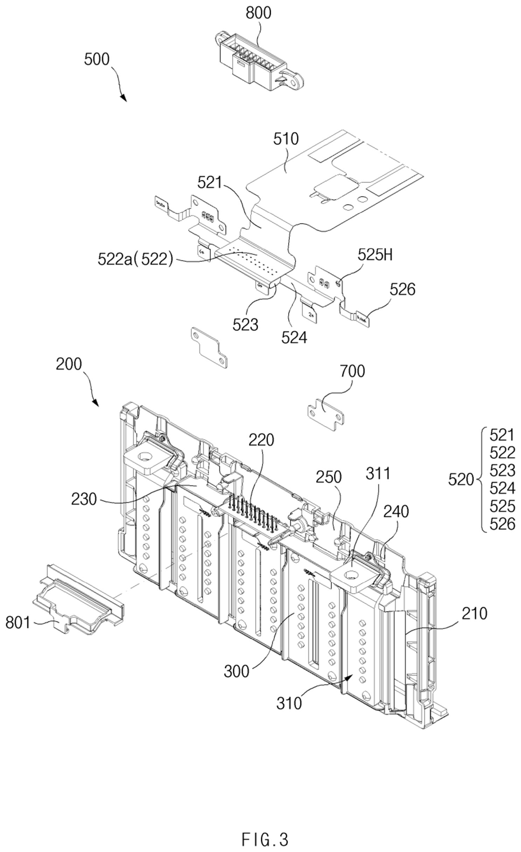

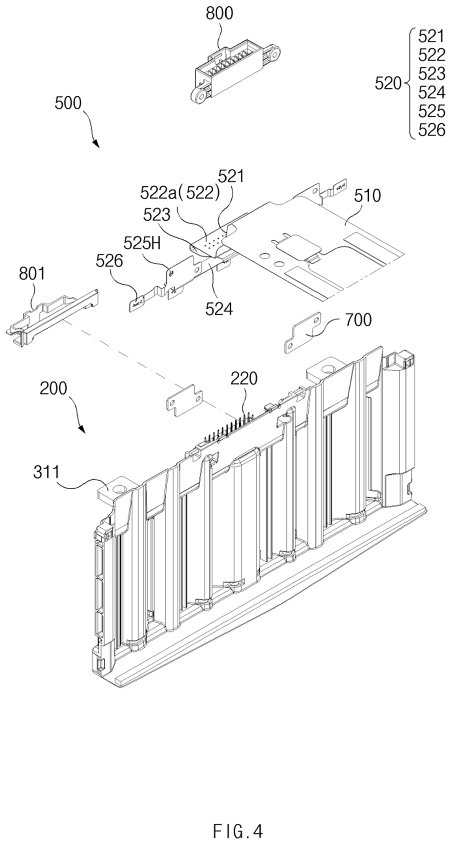

FIG. 1 is a perspective view illustrating a battery assembly BA according to a first embodiment of the present invention. FIG. 2 is an exploded view of the battery assembly BA shown in FIG. 1. FIG. 3 is an enlarged exploded view of the configuration related to the busbar 300 shown in FIG. 2. FIG. 4 is an enlarged exploded view of the configuration related to the busbar 300 shown in FIG. 3 viewed from a different angle.

Referring to FIGS. 1 to 4, a battery assembly BA according to a first embodiment of the present invention will be described.

As shown in FIG. 2, a secondary battery B may be provided to generate electricity. The secondary battery B may be provided in a pouch type as shown in FIG. 2. However, the secondary battery B is not limited thereto and may be provided in a cylindrical or prismatic type. The secondary battery B may include an electrode lead 10 for transmitting electricity to the outside. The electrode lead 10 has a metallic material so that electricity can flow therethrough. Therefore, an external component that is in contact with the electrode lead 10 may acquire electricity flowing through the electrode lead 10.

When the secondary battery B is provided as a single unit, the voltage that may be generated is limited, so a plurality of secondary batteries may be provided to increase the voltage. At this time, the plurality of secondary batteries B may form a battery assembly BA as shown in FIGS. 1 and 2. The battery assembly BA in the first embodiment is described assuming that it is a battery module for convenience of description, but the battery assembly BA may be a battery pack as needed. In this case, it may include both a case where a battery pack is formed by a plurality of battery modules gathered together and a cell-to-pack case where a plurality of secondary batteries B directly become a battery pack without forming battery modules.

At this time, the battery assembly BA may include an assembly case 100, an assembly cover 110, a secondary battery B, a busbar 300, a busbar frame 200, an end plate 400, a substrate 500, a connector 800, and/or a fuse 600. At this time, the assembly case 100, the assembly cover 110, and the connector 800 may be omitted as needed.

The assembly case 100 may have a box shape with open front, rear, and upper sides. The front and rear of the assembly case 100 may be covered by a pair of busbar frames 200 or a pair of end plates 400. A space capable of accommodating a secondary battery B may be formed inside the assembly case 100. When a secondary battery B is accommodated in the space formed inside the assembly case 100, the assembly cover 110 may cover the upper side of the assembly case 100 to seal the assembly case 100.

A plurality of secondary batteries B may be arranged in a row, and accordingly, electrode leads 10 of each of the plurality of secondary batteries B may be arranged in a row. Since the secondary batteries B must be connected in series to increase voltage, series connection between the electrode leads 10 may be required. At this time, the electrode leads 10 may have the shape of thin metal plates and may be easily deformed even by a small force, making direct coupling between the electrode leads 10 difficult to process. To solve this problem, as shown in FIG. 3, a busbar 300 may be provided that is thicker than the electrode leads 10 and thus difficult to deform. At this time, the busbar 300 may be configured to allow electrical conduction. The busbar 300 may be located at the front or rear of the secondary battery B to be located close to the electrode leads 10. Adjacent electrode leads 10 may each be in contact with the busbar 300 and be electrically connected through the busbar 300. The plurality of busbars 300 shown in FIG. 3 are electrically connected to each other in series, resulting in series connection between the secondary batteries B. For reference, the plurality of busbars 300 may include an end busbar 310 arranged at a side end. The end busbar 310 may include a terminal portion 311 that is bent and protrudes at an end. The remaining busbars 300, except for the terminal portion 311, may be covered and protected by the end plate 400. However, since electricity must be transmitted to external components through the busbar 300, the terminal portion 311 may be exposed outside the end plate 400 to perform that function.

At this time, a busbar frame 200 may be provided to support the busbar 300. The busbar frame 200 may be located between the secondary battery B and the busbar 300. In addition to the shape for supporting the busbar 300, as described below, the busbar frame 200 may have a shape for supporting each portion of the substrate 500. The electrode lead 10 may penetrate through the busbar frame 200 to contact the busbar 300.

The end plate 400 may be provided to cover the busbar 300 or the electrode lead 10. Accordingly, the end plate 400 may be located at the front or rear of the busbar frame 200.

The substrate 500 may be configured to acquire information regarding the voltage of the secondary battery B. A sensing end 526, which is an end portion of the substrate 500, may be in contact with each of the plurality of busbars 300 to acquire information regarding the voltage of the plurality of secondary batteries B. The substrate 500 may be located on an upper side of the secondary battery B. More specifically, a substrate body 510 of the substrate 500 may be located on the upper side of the secondary battery B and may be supported by the secondary battery B. However, since the busbar 300 is located below the upper side of the secondary battery B, the substrate 500 may include a substrate bending portion 520 that extends downward by bending from the substrate body 510 located on the upper side of the secondary battery B. In this case, the substrate bending portion 520 may be viewed as being bent between the end plate 400 and the busbar frame 200 from the substrate body 510 to be in contact with the busbar 300.

The substrate 500 may acquire information regarding the voltage of the plurality of secondary batteries B and transmits the information to a battery management system (BMS) (not shown). Based on the information about the voltages of the plurality of secondary batteries B, the BMS may check whether there is an abnormal secondary battery B and control the secondary battery B so that the voltage of the secondary battery B is located within a preset range. The BMS and the battery assembly BA may be connected by a wire.

As shown in FIG. 3, a connector 800 coupled to the substrate 500 may be provided to connect the substrate 500 and the BMS. A plurality of pins may be provided at an end of the connector 800 and may be inserted into holes provided in the substrate 500 for coupling the connector 800 thereto. At this time, the battery assembly BA may further include a connector mounting member 801 configured to enable the connector 800 to be easily connected to the substrate 500 or to fix the connector 800 to the busbar frame 200.

A circuit 500 electrically connecting the busbar 300 and the pins of the connector 800 may be formed on the substrate 500. When an overcurrent flows through the circuit 501, the circuit 501 may be damaged or overheating may occur, potentially causing a fire, so it is necessary to prevent this. To this end, when a current exceeding a predetermined value flows, a fuse 600 may be provided that is configured to interrupt the current flowing to the circuit 501. In other words, the fuse 600 may be located in the substrate bending portion 520 to interrupt electricity flowing to the substrate 500.

The battery assembly BA may be mounted in a device to supply electricity. For example, the battery assembly BA may be mounted in an automobile. In this case, since automobiles have spatial constraints, the battery assembly BA may have a limited volume. To generate a large amount of electrical output within the same volume, space may be used efficiently. In the process where the battery assembly BA uses space efficiently, a problem may arise where the fuse 600 may not secure a sufficient distance from adjacent components. In this case, when an external force is applied to the battery assembly BA, the fuse 600 may be in contact with surrounding components, causing cracks to occur in the fuse 600 or causing it to be damaged. When cracks occur in the fuse 600, problems may arise where the fuse 600 arbitrarily interrupts the current of the circuit 501 or fails to interrupt the current of the circuit 501 even when overcurrent flows in the circuit 501. Therefore, the battery assembly BA according to the first embodiment of the present invention may present an embodiment applying the following concept to prevent cracks from occurring in the fuse 600.

Hereinafter, to describe the structure that prevents cracks from occurring in the fuse 600, the substrate 500, busbar frame 200, and end plate 400 located adjacent to the fuse 600 will be further described.

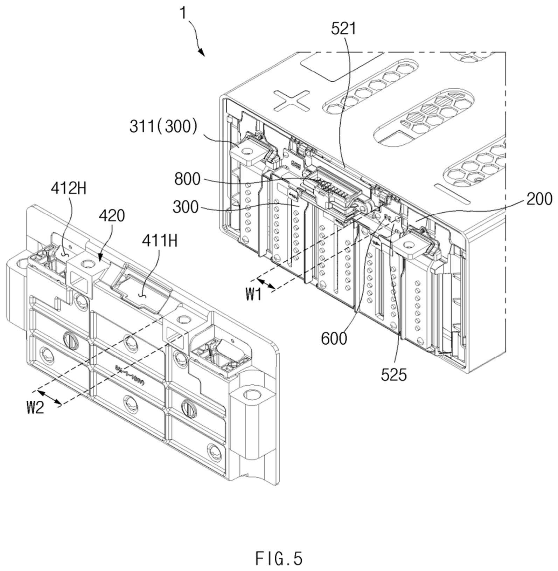

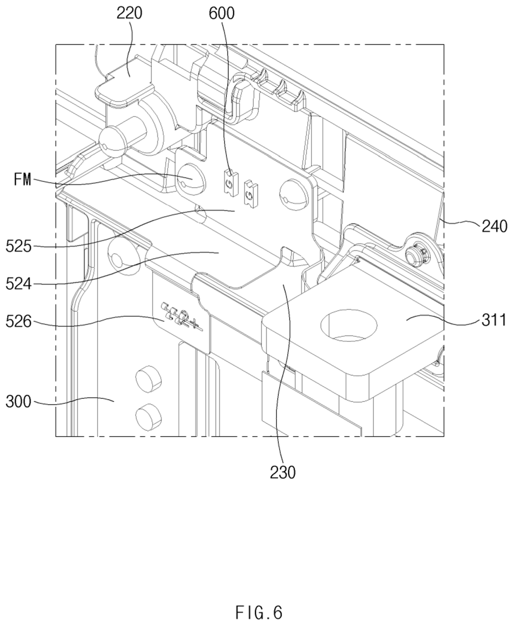

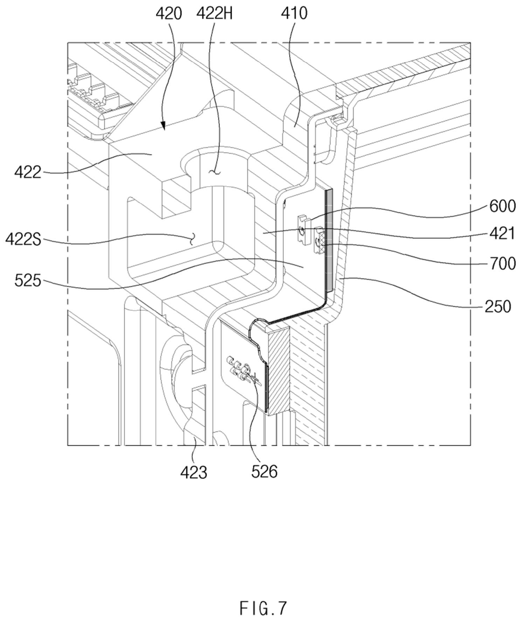

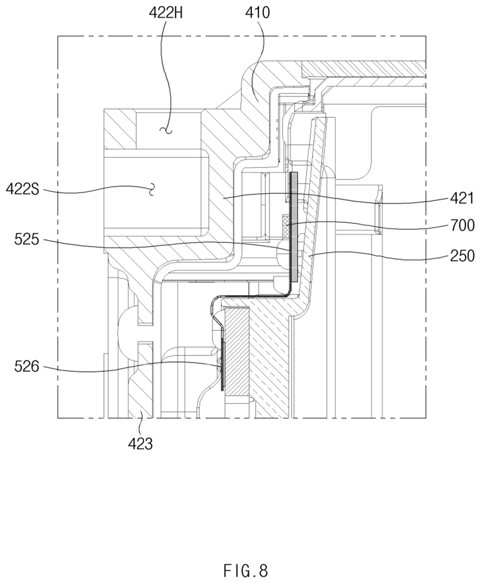

FIG. 3 is an enlarged exploded view of the configuration related to the busbar 300 shown in FIG. 2. FIG. 4 is an enlarged exploded view of the configuration related to the busbar 300 shown in FIG. 3 viewed from a different angle. FIG. 5 is an enlarged perspective view illustrating the cell assembly BA shown in FIG. 1 with an end plate 400 separated and viewed toward a location where the busbar 300 is located. FIG. 6 is an enlarged view illustrating a part of FIG. 5. FIG. 7 is a cross-sectional perspective view taken along line VII-VII' shown in FIG. 1. FIG. 8 is a cross-sectional view illustrating what is shown in FIG. 7 as viewed vertically.

The substrate 500, busbar frame 200, and end plate 400 according to the first embodiment of the present invention are further described with reference to FIGS. 3 to 7.

First, the busbar frame 200 will be described. As shown in FIGS. 3 and 4, the busbar frame 200 may include a frame body 210, a connector supporting portion 220, a busbar partition rib 230, an end busbar mounting portion 240, and an intermediate supporting portion 250. The frame body 210 may have a plate shape extending generally in the vertical direction. The connector supporting portion 220 may be located above where the busbar 300 is located and may extend toward the front. The connector supporting portion 220 may support the connector 800 on an upper surface of the connector supporting portion. A busbar partition rib 230 extending forward may be provided between the connector supporting portion 220 and the busbar 300 to partition these spaces. The busbar 300 partition lead may extend laterally and be located above the busbar 300.

The end busbar mounting portion 240 may have a shape for mounting the end busbar 310. At this time, the height of the end busbar mounting portion 240 where the terminal portion 311 of the end busbar 310 is located may be approximately similar to the height where the connector supporting portion 220 is located. Although the connector 800 is located above the busbar 300, the height of the connector 800 may be optimized for space efficiency. For similar reasons, the height of the terminal portion 311 may be similar to the height of the connector 800, and the height of the end busbar mounting portion 240 supporting the terminal portion 311 may also be similar to the connector 800. In summary, the connector 800, the connector supporting portion 220, the end busbar mounting portion 240, and the terminal portion 311 of the end busbar 310 may be located at similar heights.

Furthermore, the connector supporting portion 220 and the end busbar mounting portion 240 may be spaced apart from each other. This may be because the locations of the connector 800 and the end busbar 310 are determined. The connector 800 may be located at the center with respect to the direction in which the plurality of busbars 300 are arranged in order to make the distances to the plurality of busbars 300 as similar as possible. Furthermore, the end busbar 310 may be located at the side ends of the plurality of busbars 300. Therefore, the spacing between the connector supporting portion 220 and the end busbar mounting portion 240 may be determined according to the number of the plurality of busbars 300. At this time, a portion of the busbar frame 200 located between the connector supporting portion 220 and the end busbar 310 may be defined as the intermediate supporting portion 250. The intermediate supporting portion 250 may have a shape extending in the vertical direction. Furthermore, the intermediate supporting portion 250 may be located above the busbar partition rib 230.

Next, the substrate 500 will be described. As described above, the substrate 500 may include a substrate body 510 and a substrate bending portion 520 that extends downward by bending from the substrate body 510. As needed, the substrate bending portion 520 may extend only downward, but to avoid interference with the above-described complex structure of the busbar frame 200 and to minimize space waste in the battery assembly BA, the substrate bending portion 520 may be further bent in various directions.

The substrate bending portion 520 may include a starting bending portion 521, a connector coupling portion 522, a back extension portion 523, a side extension portion 524, a wing portion 525, and a sensing end portion 526, which are divided according to the regions where bending and extension occur.

The starting bending portion 521 may extend directly downward from the substrate body 510.

The connector coupling portion 522 may include a connector pin hole portion 522a in which holes are formed through which pins of the connector 800 pass. However, since the connector 800 may be coupled vertically from an upper side to a lower side with respect to the substrate 500, the connector coupling portion 522 may extend in a direction perpendicular to the vertical direction in order to facilitate insertion of the pins of the connector 800 into the connector pin hole portion 522a. To this end, the connector coupling portion 522 may be bent and extended forward from the starting bending portion 521 at a position corresponding to the connector supporting portion 220 of the busbar frame 200. Accordingly, the connector coupling portion 522 may be supported from the lower side by the connector supporting portion 220.

The back extension portion 523 may extend from the connector coupling portion 522 back toward the busbar frame 200. In other words, the back extension portion 523 may extend rearward. At this time, the back extension portion 523 may extend along an outer surface of the connector supporting portion 220.

The side extension portion 524 may be bent and extended from the back extension portion 523 in a direction away from the busbar frame 200. However, the side extension portion 524 may extend to sides to be wider than the back extension portion 523. Accordingly, the side extension portion 524 may be located adjacent to each of the plurality of busbars 300. At this time, the busbar partition rib 230 of the busbar frame 200 may be located on the lower side of the side extension portion 524 to support the side extension 524. The sensing terminal 526 may extend from the side extension portion 524 toward the busbar 300.

The sensing end 526 may detect signals related to the voltage of the busbar 300.

The wing portion 525 may extend from the side extension portion 524 to the intermediate supporting portion 250 of the busbar frame 200. The battery assembly BA may further include a stiffener 700 located between the wing portion 525 and the intermediate supporting portion 250, such that the wing portion 525 may be supported by the stiffener 700. At this time, a coupling hole 525H is formed in the wing portion 525, and a coupling member FM for coupling with the busbar frame 200 may pass through the coupling hole 525H. In other words, the wing portion 525 may be pin-coupled to the busbar frame 200.

Next, the end plate 400 will be described. The end plate 400 may include an upper cover portion 410, a hanger protrusion portion 420, and a busbar cover portion 423. Here, the busbar cover portion 423 may correspond to the location of the busbar 300 and may cover the busbar 300.

The upper cover portion 410 may be located above the busbar cover portion 423. The upper cover portion 410 may be formed with a connector insertion hole 411H for inserting the connector 800 and a terminal exposure hole 412H for exposing the terminal portion 311 of the end busbar 310. The hanger protrusion portion 420 may be located between the connector insertion hole 411H and the terminal exposure hole 412H.

As shown in FIG. 7, the hanger protrusion portion 420 may protrude from the upper cover portion 410. When a hook is provided to move the battery assembly BA, the battery assembly BA needs to have a hole formed for the hook to engage. The hanger protrusion portion 420 may form a structure that the hook may engage. At this time, the location of the wing portion 525 of the substrate 500 may be a location corresponding to the location of the hanger protrusion portion 420. In other words, the hanger protrusion 420 may overlap with the wing portion 525. When the wing portion 525 is moved to the side or extends further than the hanger protrusion portion 420, it is exposed through the connector insertion hole 411H or the terminal exposure hole 412H located on the side of the hanger protrusion portion 420, so the fuse 600 located on the wing portion 525 may be exposed to the outside. Since this increases the possibility that the fuse 600 may be damaged by an external force, the wing portion 525 may be located to correspond to the position of the hanger protrusion portion 420 to cover the fuse 600. Furthermore, the wing portion 525 may have a width corresponding to the width of the hanger protrusion portion 420 or a spacing portion 421 that will be described later.

At this time, the wing portion 525 may be located between the connector 800 and the terminal portion 311. In other words, the wing portion 525 may be located between the connector supporting portion 220 of the busbar frame 200 and the end busbar mounting portion 240. In other words, the wing portion 525 may be coupled to the busbar frame 200 between the connector supporting portion 220 and the end busbar mounting portion 240. It has been described that an intermediate supporting portion 250 may be provided between the connector supporting portion 220 and the end busbar mounting portion 240. The intermediate supporting portion 250 may be formed to be recessed compared to the terminal portion 311 of the end busbar 310 mounted on the connector supporting portion 220 and the end busbar mounting portion 240. In other words, when the wing portion 525 is located on the intermediate supporting portion 250, the wing portion 525 may be located without providing additional space for the wing portion 525 in the battery assembly BA, so space may not be wasted. Furthermore, the wing portion 525 may be located on the side opposite to the side facing the busbar 300 of the busbar partition rib 230.

The hanger protrusion 420 may include a hanger portion 422 having a hanger hole 422H formed therein for this purpose. The hanger portion 422 may extend forward, and the hanger hole 422H may be formed by penetrating through the hanger portion 422 in the vertical direction. A hanger space 422S communicating with the hanger hole 422H may be provided on the lower side of the hanger portion 422. The hook may enter the hanger space 422S through the hanger hole 422H, allowing the hanger portion 422 to be engaged by the hook. At this time, a spacing portion 421 may be provided at the rear of the hanger space 422S to form the hanger space 422S on the lower side of the hanger portion 422. In other words, the hanger protrusion portion 420 may include a hanger portion 422 having a hanger space 422S located outside the spacing portion 421 and a hanger hole 422H formed to communicate with the hanger space 422S to enable entry into the hanger space 422S.

At this time, the spacing portion 421 may be located to face the fuse 600 or the wing portion 525, as shown in FIG. 8. The fuse 600 may face the end plate 400. The spacing portion 421 may cover the fuse 600. The end plate 400 may include a spacing portion 421 formed spaced apart from the fuse 600 at a location corresponding to the fuse 600. Since the spacing portion 421 and the fuse 600 are not in contact with each other and are spaced apart, even when an external force is applied to the spacing portion 421, the fuse 600 is prevented from interfering with the spacing portion 421, thereby preventing cracks from occurring in the fuse 600. In other words, the spacing portion 421 may cover the fuse 600 to prevent the fuse 600 from being directly exposed to an external force, while preventing damage to the fuse 600 by the spacing portion 421 even when an external force is applied to the spacing portion 421.

At this time, the spacing portion 421 may protrude in a stepped manner. In other words, as shown in FIG. 8, the spacing portion 421 may protrude in a stepped manner from the upper cover portion 410 located above it and may protrude less in a stepped manner than the busbar cover portion 423 located below it. Once again, the end plate 400 may further include an upper cover portion 410 extending from the side of the spacing portion 421 closer to the substrate body 510 and a busbar cover portion 423 extending from the side of the spacing portion 421 closer to the busbar 300, and the spacing portion 421 may protrude more than the upper cover portion 410 and protrude less than the busbar cover portion 423. Accordingly, the spacing portion 421 may have increased rigidity. The spacing portion 421 is located where the fuse 600 is located, and when damaged, there is a risk that the fuse 600 may be directly exposed to an external force. Therefore, the spacing portion 421 needs to have strong resistance to damage. Since the stepped shape increases resistance to impact, the stepped spacing portion 421 has increased rigidity and can better protect the fuse 600.

As previously described, the wing portion 525 may be formed with coupling holes 525H. The coupling holes 525H may be provided in a pair to prevent rotation of the wing portion 525. However, as needed, the coupling hole 525H may be singular, or more than a pair of coupling holes 525H may be formed. Since damage to the coupling holes 525H threatens secure fixation of the wing portion 525 to the busbar frame 200, to prevent this, as shown in FIG. 7, at least some of the coupling holes 525H may be covered by the spacing portion 421.

Furthermore, as previously described, the stiffener 700 may be located between the wing portion 525 and the busbar frame 200 and may support the wing portion 525. As shown in FIG. 8, the stiffener 700 may support the wing portion 525 such that the wing portion 525 is parallel to the spacing portion 421. Accordingly, the wing portion 525 may be stably supported by the stiffener 700.

Additionally, considering the width of the intermediate supporting portion 250 described above, the number of fuses 600 that may be located on the wing portion 525 may be limited. In consideration of this, the designed substrate 500 and the circuit 501 related to the fuse 600 are described below.

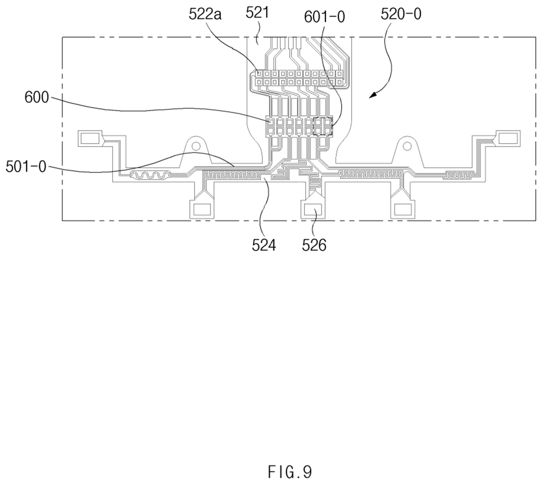

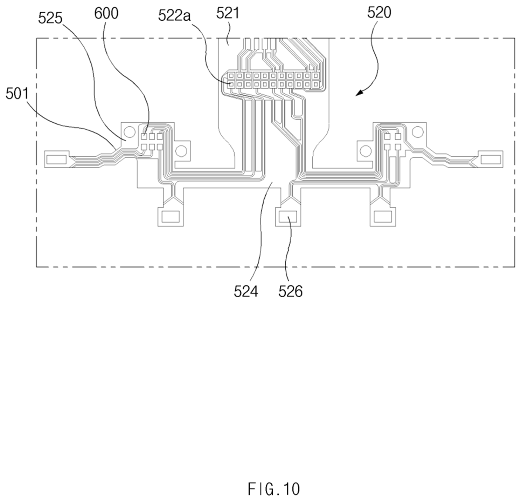

FIG. 9 is an enlarged view illustrating a plate bending portion 520 of a substrate 500 according to a comparative example corresponding to the substrate bending portion 520 of the substrate 500 shown in FIG. 2. FIG. 10 is an enlarged view illustrating the substrate bending portion 520 of the substrate 500 shown in FIG. 2.

The substrate bending portion 520-0 of the comparative example as shown in FIG. 9 has a circuit 501 connected from the connector pin hole portion 522a to the sensing end portion 526, and a total of seven fuses 600 are arranged side by side on the circuit 501. At this time, all of the circuits 501-0 from the connector pin hole portion 522a to the sensing end portion 526 may have the same length. This is because when the lengths of the circuits 501-0 differ from each other, the resistance according to the length of the circuit 501-0 will vary, making it difficult to transmit accurate values. To this end, it may be confirmed that the circuit 501-0 of the substrate 500 according to the comparative example has repeatedly bent portions, that is, meandering portions.

In contrast, the substrate 500 according to the first embodiment of the present invention has three fuses 600 arranged on the left wing portion 525 and two fuses 600 arranged on the right wing portion 525. When the width of the intermediate supporting portion 250 is less than four times the width occupied by the fuse 600, that is, when the width of the region covered by the spacing portion 421 is less than four times the width occupied by the fuse 600, all seven fuses 600 may not be located on the wing portions 525. In this case, by removing two fuses 601-0 from the comparative example, all fuses 600 may be disposed on the intermediate supporting portion 250 using five fuses 600 as in the first embodiment of the present invention. The two removed fuses 601-0 relate to SUPPLY and MODULE, and may be removed from the battery assembly BA in the first embodiment presented as a module, since they serve to interrupt a current when an excessive current flows at the pack level rather than the module level.

Furthermore, each of the plurality of circuits 501 of the substrate 500 according to the first embodiment of the present invention may be configured to have the same length so that the resistance is equal, while having no repeatedly bent portions. Accordingly, the overall length of the circuit 501 may shortened so that the resistance caused by the circuit 501 is be reduced compared to the comparative example. Furthermore, the area occupied by the circuit 501 may be reduced, so that the probability of damage to the circuit 501 is also reduced.

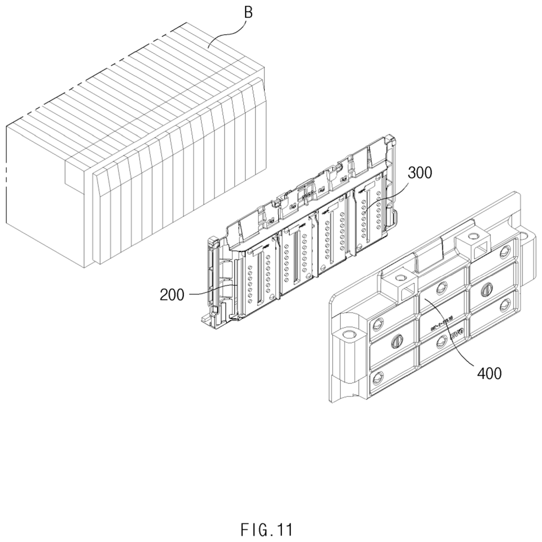

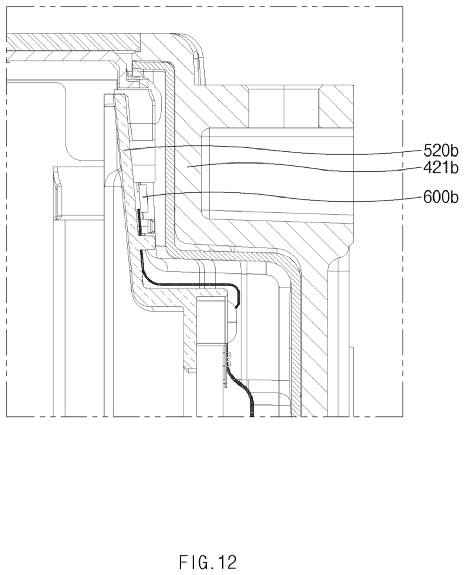

FIG. 11 is an exploded view illustrating the battery assembly BA shown in FIG. 2 as viewed from the rear. FIG. 12 is a cross-sectional view taken along line XII-XII' shown in FIG. 1.

Referring to FIGS. 11 and 12, the fuse 600 and substrate 500 located at the rear of the battery assembly BA will be described.

The description referring to FIGS. 1 to 10 above may be a description of the fuse 600 located at the front of the battery assembly BA and its associated configuration. The fuse 600 located at the rear of the battery assembly BA and its related configuration may be configured differently from the above.

For distinction, the above-described fuse 600 may be referred to as a first fuse 600, and the one described below may be referred to as a second fuse 600b. Similarly, the above-described separation portion 421may be referred to as a first separation portion 421, and the one described below may be referred to as a second separation portion 421b, and the above-described substrate bending portion 520may be referred to as a first substrate bending portion 520, and the one described below may be referred to as a second substrate bending portion 520b.

As shown in FIG. 12, the second substrate bending portion 520b may be supported directly by the busbar frame 200 without support by the stiffener 700 and may extend with an inclination. At this time, the second fuse 600b may be located on the second supporting portion. The second substrate bending portion 520b may not include a separate wing portion 525 as in the previous case. At this time, the second separation portion 421b may be located spaced apart from the second fuse 600b, similar to the first separation portion 421.

Unlike the first substrate bending portion 520, the second substrate bending portion 520b does not need to consider the presence of the connector 800, so the shape may be determined more freely.

The description of the first substrate bending portion 520 of the battery assembly BA may also be applied to the second substrate bending portion 520b as needed. Furthermore, the description of the second substrate bending portion 520b may be applied to the first substrate bending portion 520.

Hereinafter, embodiments that are different from the first embodiment will be described. Content common to the first embodiment will be omitted as much as possible, and the other embodiments will be described focusing on the differences. In other words, it is obvious that when content not described in the other embodiments is needed, it may be supplemented through the content of the first embodiment.

### Second embodiment

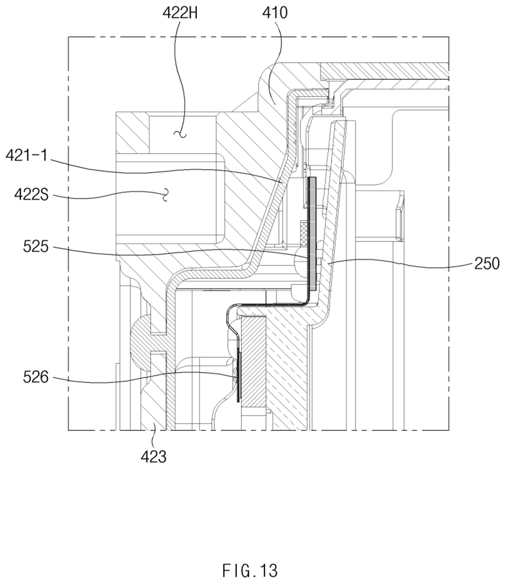

FIG. 13 is a cross-sectional view illustrating a substrate bending portion 520 and associated components thereof according to a second embodiment of the present invention.

Referring to FIG. 13, the spacing portion 421-1 according to the second embodiment of the present invention will be described.

The second embodiment differs from the first embodiment in that the spacing portion 421-1 is not formed in a stepped manner.

The spacing portion 421-1 may connect between the upper cover portion 410 and the busbar cover portion 423. At this time, the spacing portion 421-1 may have a shape extending in one direction.

### Third embodiment

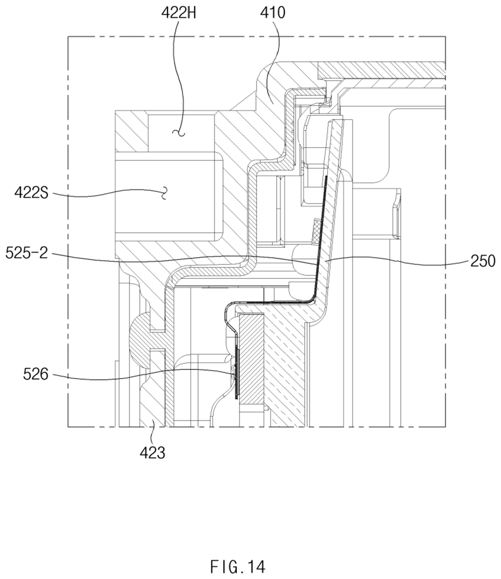

FIG. 14 is a cross-sectional view illustrating a substrate bending portion 520 and associated components thereof according to a third embodiment of the present invention.

Referring to FIG. 14, the wing portion 525-2 according to the third embodiment of the present invention will be described.

The third embodiment differs from the first embodiment in that the wing portion 525-2 does not extend vertically.

In the third embodiment, the stiffener 700 may not be provided. The wing portion 525-2 may be directly supported by the intermediate supporting portions 250 of the busbar frame 200. To this end, the wing portion 525-2 may extend obliquely along the extension direction of the intermediate supporting portion 250.

### Fourth embodiment

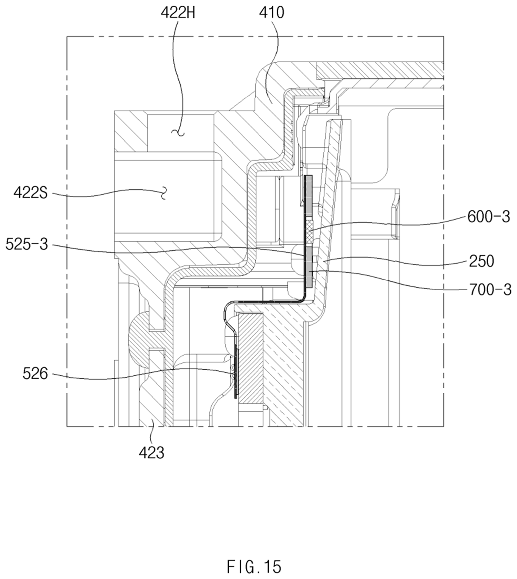

FIG. 15 is a cross-sectional view illustrating a substrate bending portion 520 and associated components thereof according to a fourth embodiment of the present invention.

Referring to FIG. 15, the fuse 600-3 according to the fourth embodiment of the present invention will be described.

The fourth embodiment differs from the first embodiment in that the fuse 600-3 faces an opposite direction of the end plate 400.

The fuse 600-3 may be located on the wing portion 525-3 to face toward the busbar frame 200. For positioning of the fuse 600-3, the stiffener 700-3 may have a hole formed therein to accommodate the fuse 600-3.

### Fifth embodiment

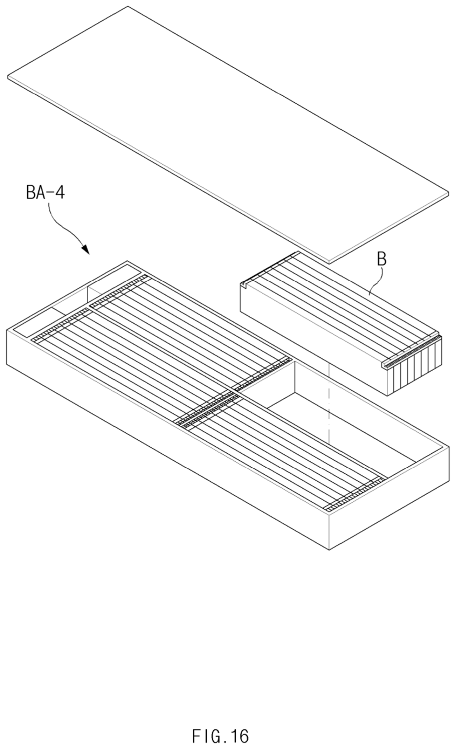

FIG. 16 is an exploded view illustrating a battery assembly BA-4 according to a fifth embodiment of the present invention.

Referring to FIG. 16, the battery assembly BA-4 according to the fifth embodiment of the present invention will be described.

The fifth embodiment differs from the first embodiment in that the battery assembly BA-4 is a battery pack.

The battery assembly BA-4 may be configured as a cell-to-pack structure.

Unless expressly stated otherwise, the above-described embodiments may be combined with other embodiments. Alternatively, unless an embodiment is explicitly restricted from being combined with other embodiments, it should be understood that combinations between embodiments are possible. The combination of any embodiment with another embodiment is considered to be disclosed in this document.

Although the present invention has been described above with reference to limited embodiments and drawings, the present invention is not limited thereto, and various implementations are possible by those skilled in the art to which the present invention pertains within the scope equivalent to the technical spirit of the present invention and the claims to be set forth below.

The above-described embodiments may be combined with other embodiments. Alternatively, unless an embodiment is explicitly restricted from being combined with another embodiment, it should be understood that combinations between embodiments are possible. The combination of any embodiment with another embodiment is considered to be disclosed in this document.

Although the present invention has been described above with reference to limited embodiments and drawings, the present invention is not limited thereto, and various implementations are possible by those skilled in the art to which the present invention pertains within the scope equivalent to the technical spirit of the present invention and the claims to be set forth below.

### [Reference Numerals]

B: secondary battery
10: electrode lead
BA: battery assembly
100: assembly case
110: assembly cover
200: busbar frame
210: frame body
220: connector supporting portion
230: busbar partition rib
240: end busbar mounting portion
250: intermediate supporting portion
300: busbar
310: end busbar
311: terminal portion
400: end plate
410: upper cover portion
411H: connector insertion hole
412H: terminal exposure hole
420: hanger protrusion portion
421: spacing portion, first spacing portion
421b: second spacing portion
422: hanging portion
422S: hanging space
422H: hanging hole
423: busbar cover portion
500: substrate
501: Circuit
510: Substrate body
520: Substrate bending portion, first substrate bending portion
520b: second substrate bending portion
521: starting bending portion
522: connector coupling portion
522a: connector pin hole portion
523: back extension portion
524: side extension portion
525: wing portion
525H: coupling hole
526: sensing end
600: fuse, first fuse
600b: second fuse
601-0: removed fuse
700: stiffener
800: connector
801: connector mounting member
FM: coupling member

## Claims

1. A battery assembly comprising:
a busbar capable of conducting electricity;
a busbar frame configured to support the busbar;
an end plate configured to cover the busbar frame; and
a substrate including a substrate body and a substrate bending portion that is bent between the end plate and the busbar frame so as to come into contact with the busbar from the substrate body; and
a fuse located on the substrate bending portion to interrupt an electrical current flowing through the substrate,
wherein the fuse faces the end plate, and the end plate includes a spacing portion formed spaced apart from the fuse at a position corresponding to the fuse.

2. The battery assembly of claim 1, wherein the spacing portion protrudes in a stepped manner.

3. The battery assembly of claim 1, wherein the end plate further includes: an upper cover portion extending from a side of the spacing portion close to the substrate body; and a busbar cover portion extending from a side of the spacing portion close to the busbar,
wherein the spacing portion protrudes more than the upper cover portion and protrudes less than the busbar cover portion.

4. The battery assembly of claim 1, wherein the end plate includes a hanger protrusion portion including the spacing portion, and the hanger protrusion portion includes:
a hanger space located outside of the spacing portion; and
a hanger portion having a hanger hole formed therein, the hanger hole being in communication with the hanger space to allow for entry into the hanger space.

5. The battery assembly of claim 1, further comprising a connector mounted on the substrate bending portion, wherein the busbar is provided in plurality and includes an end busbar having a terminal portion that is located at an outermost side and is bent to protrude therefrom, and the substrate bending portion is located between the connector and the terminal portion and includes a wing portion where the fuse is located.

6. The battery assembly of claim 5, wherein the end plate includes:
a connector insertion hole formed for insertion of the connector; and
a terminal portion exposure hole formed such that the terminal portion is exposed to the outside and configured such that the spacing portion is located between the terminal portion exposure hole and the connector hole,
wherein the wing portion is configured to be covered by the spacing portion.

7. The battery assembly of claim 6, wherein the wing portion has a width corresponding to the spacing portion, and the spacing portion covers an area of which width is less than four times a width occupied by the fuse.

8. The battery assembly of claim 5, wherein the wing portion is pin-coupled to the busbar frame.

9. The battery assembly of claim 8, wherein the wing portion has a coupling hole formed therein for the pin-coupling, and the coupling hole is covered by the spacing portion.

10. The battery assembly of claim 5,
wherein the busbar frame includes a busbar partition rib protruding to separate the busbar and the connector, and the wing portion is located on a side of the busbar partition rib opposite to the busbar.

11. The battery assembly of claim 5, further comprising a stiffener located between the wing portion and the busbar frame and supporting the wing portion,
wherein the stiffener supports the wing portion such that the wing portion is parallel to the spacing portion.

12. The battery assembly of claim 5, wherein the busbar frame includes:
a connector supporting portion protruding to allow coupling of the connector; and
an end busbar mounting portion configured to mount the end busbar,
wherein the wing portion is coupled to the busbar frame between the connector supporting portion and the end busbar mounting portion.

13. The battery assembly of claim 12, wherein the busbar frame includes a busbar partition rib protruding to separate the busbar and the connector,
wherein the substrate bending portion includes:
a starting bending portion extending toward the busbar;
a connector coupling portion bent and extending from the starting bending portion in a direction approaching the end plate, configured to have a connector mounted thereon, and supported by the connector supporting portion;
a back extension portion bent and extending from an end of the connector supporting portion at the connector coupling portion in a direction away from the end plate; and
a side extension portion bent from the back extension portion and extending toward the end plate, supported by the busbar partition rib, and having a width greater than the back extension portion,
wherein the wing portion extends from the side extension portion in a direction away from the busbar.

14. The battery assembly of claim 1, further comprising a connector mounted on the substrate bending portion,
wherein the busbar is provided in plurality,
wherein the substrate bending portion includes:
a sensing end provided in plurality, each contacting a respective one of the plurality of busbars;
a connector pin hole provided in plurality into which the connector is inserted; and
a plurality of circuits extending from each of the plurality of connector pin holes to a respective one of the plurality of sensing ends and configured to allow a current to be interrupted by the fuse,
wherein each of the plurality of circuits has a same length to have equal resistance.

15. The battery assembly of claim 14, wherein the plurality of circuits is configured to have no repeatedly bent portions.

16. A battery module comprising:
a busbar capable of conducting electricity;
a busbar frame configured to support the busbar;
an end plate configured to cover the busbar frame; and
a substrate including a substrate body and a substrate bending portion that is bent between the end plate and the busbar frame so as to come into contact with the busbar from the substrate body; and
a fuse located on the substrate bending portion to interrupt an electrical current flowing through the substrate,
wherein the fuse faces the end plate, and the end plate includes a spacing portion formed spaced apart from the fuse at a position corresponding to the fuse.

17. The battery module of claim 16, the spacing portion protrudes in a stepped manner.

18. The battery module of claim 16, the end plate further includes: an upper cover portion extending from a side of the spacing portion close to the substrate body; and a busbar cover portion extending from a side of the spacing portion close to the busbar,
wherein the spacing portion protrudes more than the upper cover portion and protrudes less than the busbar cover portion.

19. The battery module of claim 16, wherein the end plate includes a hanger protrusion portion including the spacing portion, and the hanger protrusion portion includes:
a hanger space located outside of the spacing portion; and
a hanger portion having a hanger hole formed therein, the hanger hole being in communication with the hanger space to allow for entry into the hanger space.

20. A substrate comprising:
a substrate body; and
a substrate bending portion configured to be bent from the substrate body,
wherein the substrate bending portion includes:
a starting bending portion having a width smaller than or equal to a width of the substrate body;
a side extension portion located closer to an end than the starting bending portion and having a width greater than the width of the starting bending portion;
a wing portion extending from the side extension portion toward the substrate body; and
a sensing end extending from the side extension portion or the wing portion and having a sensing function,
wherein the wing portion is configured such that a fuse is located thereon.
